# EUROPÄISCHE PATENTSCHRIFT

(11) **EP 2 133 162 B1**
(45) Veröffentlichungstag und Bekanntmachung des Hinweises auf die Patenterteilung: **18.09.2013**
(21) Anmeldenummer: 09006605.1
(22) Anmeldetag: 15.05.2009
(51) Int. Cl.: B21D 39/02, B62D 27/02, F16B 11/00

(54) **Verfahren zum Herstellen einer Blechverbindung**
Method for manufacturing a sheet metal connection
Procédé de réalisation d'une liaison entre deux tôles

(30) Priorität: 14.06.2008 DE 102008028450
(43) Veröffentlichungstag der Anmeldung: 16.12.2009
(73) Patentinhaber: Bayerische Motoren Werke, 80809 München (DE)
(72) Erfinder: Berndl, Jürgen, 85405 Nandlstadt (DE); Stangl, Robert, 86444 Affing (DE); Hornig, Hans, 83536 Gars (DE)

(56) Entgegenhaltungen:
- JP-U- 61 148 427
- JP-U- 62 127 325
- US-A1- 2005 102 817
- US-B1- 6 368 008

## Beschreibung

Die Erfindung betrifft ein Verfahren zum Herstellen einer Blechverbindung, gemäß dem Oberbegriff des Anspruchs 1.

Karosserien von Kraftfahrzeugen bestehen aus einer Vielzahl von miteinander verbundenen Blechen, die zumeist aus Stahl oder Aluminium bestehen.

Bei Karosserieanbauteilen wie beispielsweise Türen werden die einzelnen Bleche häufig durch Bördeln miteinander verbunden. Hierbei wird ein erstes Blech um die Kante eines zweiten Blechs gebogen, wodurch ein Falz in dem ersten Blech entsteht, in dem die Kante des zweiten Blechs gehalten wird. Durch das Bördeln wird folglich eine formschlüssige Verbindung zwischen den zwei Blechen erzeugt.

Um die Festigkeit von Bördelverbindungen zu erhöhen und gleichzeitig die Korrosionsgefahr in dem Falz zu verringern, wird das Bördeln häufig gleichzeitig mit einem Verkleben der zwei Bleche in dem Kontaktbereich zwischen den Blechen im Bereich der Falz angewendet. Nach dem Aushärten des Klebstoffs wird durch diesen die Verbindung zwischen den zwei Blechen verstärkt und ein Eindringen von Feuchtigkeit in den Falz bzw. den Kontaktbereich zwischen den zwei Blechen verhindert.

Anders als bei anderen mechanischen Fügeverfahren, wie beispielsweise bei Verschraubungen oder Vernietungen, verhindert eine Bördelnaht nicht vollständig ein Verschieben der miteinander verbundenen Bleche zueinander. Ein solches teilweises Verschieben der zwei Bleche zueinander wird erst nach einem Aushärten der Klebeverbindung unterbunden. Erfolgt jedoch während des Aushärtens der Klebeverbindung ein Verschieben zwischen den Blechen, so kann dies dazu führen, dass die Klebeverbindung zumindest teilweise zerstört wird, wodurch die Endfestigkeit der Verbindung herabgesetzt und die Korrosionsgefahr erhöht wird.

Die gattungsbildende US 2005/0102817 A1 zeigt eine Verbindung zweier gestempelter Bleche, wobei ein inneres Blech eine Erhebung aufweist, die einstückig mit dem inneren Blech verbunden ist und vor der Verbindung mit dem äußeren Blech erstellt wird. Ein Flanschbereich des äußeren Bleches wird auf die Erhebung gepresst, so dass das äußere Blech die Erhebung umschließt und dadurch eine mechanische Verzahnung darstellt zwischen dem inneren und dem äußeren Blech.

Die JP 62-127325 zeigt eine Verbindung zweier Bleche, wobei ein erstes Blech um ein zweites Blech herum gebogen ist und eine erste Öffnung aufweist, die kongruent über eine zweiten Öffnung im zweiten Blech angeordnet ist. Ein Abschnitt eines umgeschlagenen Endbereichs des ersten Bleches wird mit Hilfe eines Dornes durch die zweite Öffnung im zweiten Blech und die erste Öffnung im ersten Blech hindurch gepresst.

Ausgehend von diesem Stand der Technik liegt der Erfindung die Aufgabe zugrunde, ein verbessertes Verfahren zur Herstellung einer Blechverbindung anzugeben.

Diese Aufgabe wird durch den Gegenstand des unabhängigen Patentanspruchs gelöst.

Beim Clinchen, das auch als Durchsetzfügen bekannt ist, handelt es sich um ein Verfahren zum Verbinden von Blechen ohne Verwendung eines Zusatzwerkstoffs. Beim Clinchen wird in einem Umformverfahren ein Blech einer Verbindung aus mindestens zwei Blechen mittels eines Stempels lokal in das zumindest zweite Blech getrieben, wodurch dieses ebenfalls umgeformt und eine hinterschnittige Verbindung zwischen den zwei Blechen erzeugt wird. Die Art der Umformung der zwei Bleche wird insbesondere durch die Form der Kavität in der darunterliegenden Matrize beeinflusst.

Durch das erfindungsgemäß vorgesehene zusätzliche Clinchen der verklebten Bördelverbindung zwischen den zwei Blechen kann wirkungsvoll ein ungewolltes Verschieben der zwei Bleche zueinander während des Aushärtens der Klebeverbindung verhindert werden. Es ist daher möglich, die miteinander verbundenen Bleche bereits weiterzuverarbeiten, auch wenn die Klebeverbindung noch nicht ausreichend ausgehärtet ist. Gegebenenfalls kann durch die zusätzliche Clinchverbindung auf das Einbringen der zwei Bleche in einen Trocken- bzw. Gelierofen verzichtet werden, der häufig im Stand der Technik für ein schnelles Aushärten der Klebeverbindung vorgesehen wird.

Nach der vorliegenden Erfindung wird in das zweite Blech zunächst eine Öffnung eingebracht werden, in der das erste Blech verclincht wird. Bei dem Verfahren gemäß der Erfindung muss während des Clinchens lediglich das erste Blech plastisch deformiert werden. Auf diese Weise können die Clinchkräfte reduziert und infolge dessen die Kosten für die Clinchvorrichtung gering gehalten werden.

Die Erfindung wird nachfolgend anhand eines in den Zeichnungen dargestellten Ausführungsbeispiels näher erläutert.

In den Zeichnungen zeigt in vereinfachter Darstellung die
- Fig. 1:: die Innenseite einer unverkleideten Tür eines Kraftfahrzeugs; und
- Fig. 2:: einen Schnitt durch die Tür der Fig. 1 entlang der Linie A-A.

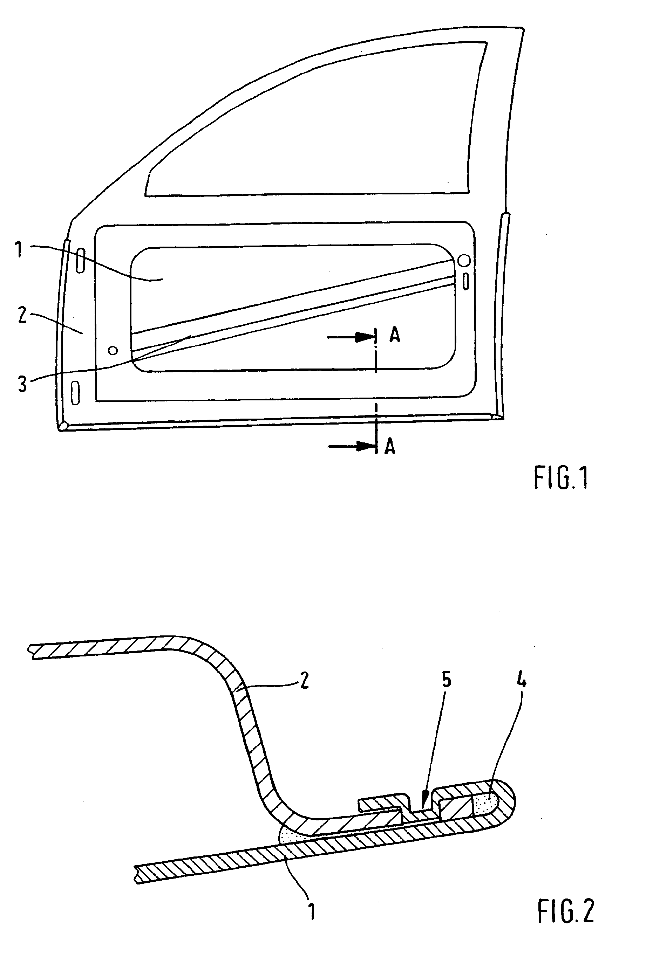

In der Fig. 1 ist die Innenseite einer unverkleideten Tür eines Kraftfahrzeugs dargestellt. Diese Tür, die sich noch im Karosserierohbaustadium befindet, besteht aus einem Türaußen- 1 und einem Türinnenblech 2 sowie einer zwischen diesen Türblechen angeordneten Strebe 3, die die Tür im Falle eines Seitenaufpralls verstärken soll.

In der Fig. 2 ist ein Schnitt durch die Tür der Fig. 1 entlang der Linie A-A dargestellt. Wie der Fig. 2 zu entnehmen ist, ist das Türaußen- 1 mit dem Türinnenblech 2 mittels einer Bördelverbindung verbunden, wobei hierzu das Türaußenblech 1 um die Kante des Türinnenblechs 2 gebogen ist. Hierbei entsteht eine Falz des Türaußenblechs 1, in die zusätzlich ein Klebstoff 4 eingebracht worden ist, der das Türaußen- 1 mit dem Türinnenblech 2 kraftschlüssig verbindet. Um während des Aushärtens des Klebeverbindung ein Verschieben zwischen dem Türaußen- 1 und dem Türinnenblech 2 zu verhindern, sind die beiden Türbleche zusätzlich an mehreren definierten Punkten im Bereich der Falz mittels einer zusätzlichen Clinchverbindung 5 verbunden. Bei der Clinchverbindung 5 wird das Türaußenblech 1 mittels eines Stempels (nicht dargestellt) in eine bereits vorgesehene Öffnung des Türinnenblechs 2 getrieben und hierbei plastisch verformt.

## Patentansprüche

1. Verfahren zum Herstellen einer Blechverbindung, wobei zur Erzeugung einer Falz ein erstes Blech um die Kante eines zweiten Blechs gebogen wird und zusätzlich im Bereich der Falz in den Kontaktbereich zwischen den Blechen ein Klebstoff (4) eingebracht wird, wobei die zwei Bleche zusätzlich im Bereich der Falz geclincht werden, **dadurch gekennzeichnet, dass** in das zweite Blech eine Öffnung eingebracht wird, in der das erste Blech verclincht wird.

## Claims

1. A method of producing a sheet-metal connection, wherein a fold is formed in a first sheet by bending it around the edge of a second sheet and an adhesive (4) is introduced in the neighbourhood of the fold in the contact area between the sheets, wherein the two sheets are additionally clinched in the fold area, **characterised in that** an opening for clinching the first sheet is made in the second sheet.

## Revendications

1. Procédé de réalisation d'une liaison entre deux tôles, selon lequel pour obtenir un pli, on replie une première tôle autour de l'arête d'une seconde tôle, et en outre, on applique un adhésif (4) dans la zone du pli dans la zone de contact entre les tôles, les deux tôles étant en outre serties dans la zone du pli,
**caractérisé en ce que**
on réalise dans la seconde tôle une ouverture dans laquelle la première tôle est sertie.
